# EUROPÄISCHE PATENTSCHRIFT

(11) **EP 0 472 955 B1**
(45) Veröffentlichungstag und Bekanntmachung des Hinweises auf die Patenterteilung: **12.10.1994**
(21) Anmeldenummer: 91113168.8
(22) Anmeldetag: 06.08.1991
(51) Int. Cl.: B60N 2/34, B60P 3/38

(54) **Sitz/Liegekombination für Kraftfahrzeuge**
Seat/bed combination for motor vehicles
Combinaison siège/couchette pour véhicules automobiles

(30) Priorität: 27.08.1990 DE 4027082
(43) Veröffentlichungstag der Anmeldung: 04.03.1992
(73) Patentinhaber: Westfalia-Werke Knöbel GmbH & Co., 33378 Rheda-Wiedenbrück (DE)
(72) Erfinder: Braun, Dieter, Dipl.-Ing., W-4840 Rheda-Wiedenbrück (DE); Gretencord, Johannes, Dipl.-Ing., W-5790 Brilon (DE)
(74) Vertreter: Müller, Gerd, Dipl.-Ing.

(56) Entgegenhaltungen:
- EP-A- 0 221 229
- US-A- 4 186 960
- US-A- 4 620 335
- US-A- 4 625 346
- US-A- 4 660 235

## Beschreibung

Die Erfindung betrifft einen in einen Liegeplatz umwandelbaren Polstersitz nach dem Oberbegriff des Anspruchs 1.

Die EP-B-0 221 229 offenbart einen gattungsgemäßen Polstersitz, bei dem das Sitzpolster, das Lehnenpolster und der dritte Polsterkörper eine Kombination bilden, bei der der dritte Polsterkörper unter dem Sitzpolster vorgesehen ist. Für diesen Polstersitz gelten die strengen Sicherheitsanforderungen in bezug auf die Befestigung von Kraftfahrzeugsitzen. Für die große Masse bzw. das große Gewicht dieses dreiteiligen Polstersitzes sind besonders stabile Befestigungs- und Führungselemente sowohl am Kraftfahrzeug als auch an den Polstersitzen notwendig, die einen erheblichen Stabilitätsaufwand am Kraftfahrzeug erforderlich machen und das Kraftfahrzeug-Gewicht erheblich erhöhen.

Der Erfindung liegt die Aufgabe zugrunde, eine Sitz-/Liegekombination für Kraftfahrzeuge aufzuzeigen, deren Aufbau in Sitzposition sehr kompakt und platzsparend ist und deren Polstersitz eine sehr kleine Masse aufweist.

Diese Aufgabe wird durch das kennzeichnende Merkmal des Anspruchs 1 gelöst. Der kompakte Aufbau in Sitzposition ist durch den annähernd senkrecht stehenden, und an dem Lehnenpolster anliegenden dritten Polsterkörper gewährleistet.

Die Masse bzw. das Gewicht des dritten Polsterkörpers muß nicht von der Halterung des Polstersitzes geführt und getragen werden, da der dritte Polsterkörper direkt am Kraftfahrzeug gehaltert ist. Selbst die Seitenlehnen sind fahrzeugfest angeordnet und somit nicht mit dem Polstersitz verbunden.

Dadurch, daß der dritte Polstersitz annähernd senkrecht steht, wird unter dem Sitzpolster am Wagenboden begehrter Stauraum frei. Dieser tiefliegende Stauraum kann für erheblich schwerere Gegenstände als den dritten Polsterkörper genutzt werden, wodurch sich die Lage und das Fahrverhalten des Kraftfahrzeugs verbessern. Durch den in Sitzposition aufgestellten dritten Polsterkörper wird zudem der Fahrgastraum des Multimobils sicher vom Gepäckraum abgetrennt, so daß die Lehne von dieser Trennfunktion entlastet wird und noch leichter ausgebildet werden kann.

Die Erfindung wird anhand einer Zeichnung näher erläutert. Dabei zeigen
- Fig. 1: die teilweise aufgebrochen und geschnitten gezeigte Seitenansicht eines Multimobils mit Polstersitz in Sitzposition und
- Fig. 2: ein Multimobil nach Fig. 1 mit Polstersitz in Liegeposition.

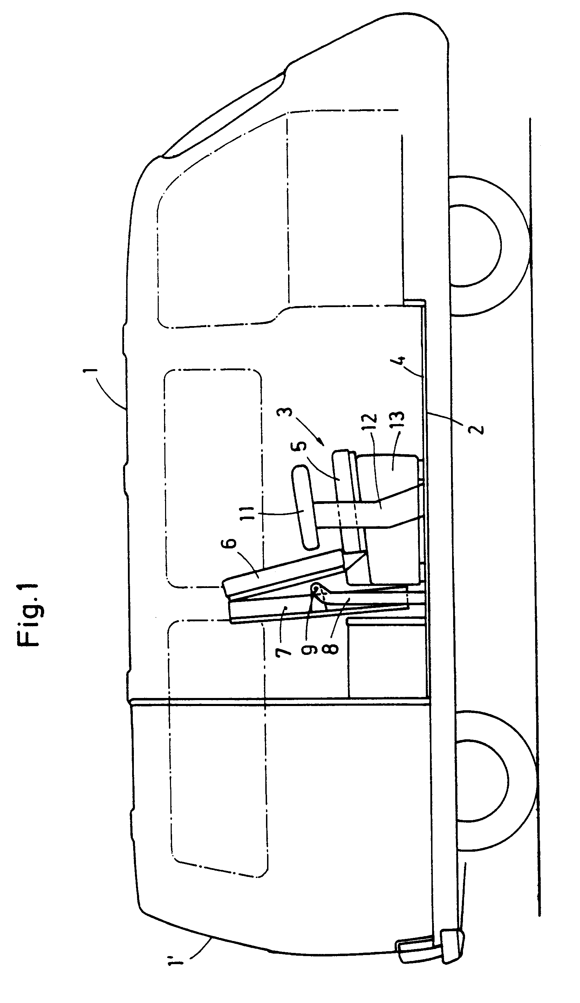

Der Figur 1 ist das Heck 1' eines Kraftfahrzeuges 1 zu entnehmen, auf dessen Boden 2 ein Polstersitz 3 in Schienen 4 geführt ist. Der polstersitz 3 besteht aus dem Sitzpolster 5 und dem Lehnenpolster 6. Hinter dem Lehnenpolster 6 ist ein dritter Polsterkörper 7 gezeigt. Am Boden 2 festsitzende Wangen 8 schließen den Polsterkörper 7 zwischen sich ein und tragen diesen in Schwenklagern 9. Der Polsterkörper 7 weist mindestens eine klappbare Stütze 10 auf. Eine Seitenlehne 11 ist an einer Wange 12 fest mit dem Boden 2 verbunden. Die Wangen 8 und 12 sind durch eine nicht gezeigte Abdeckung verkleidet. Unter dem polstersitz 3 ist eine Abdeckung 13 angedeutet, die einen Stauraum umgrenzt.

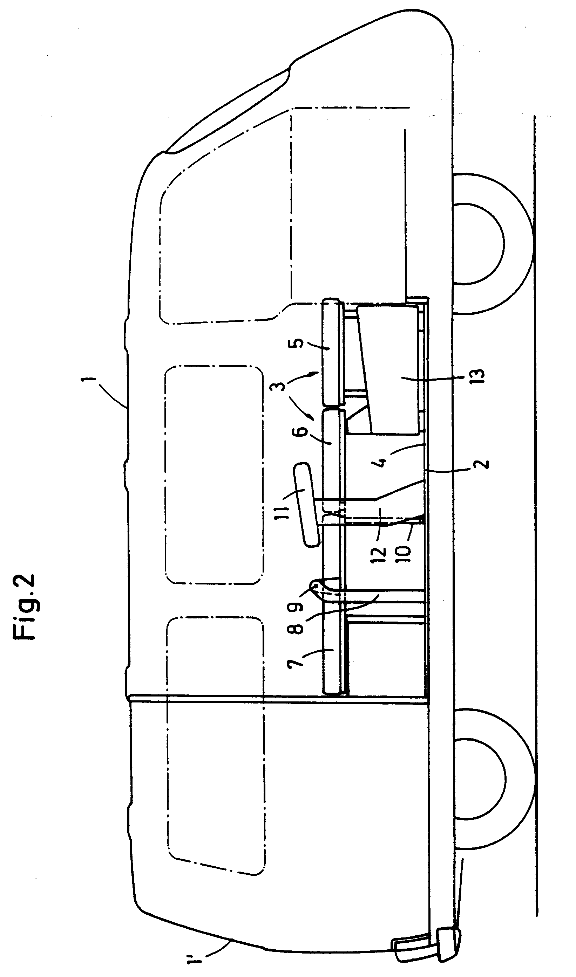

Aus Figur 2 ist zu entnehmen, daß der Polstersitz 3 in der Schiene 2 in Fahrtrichtung nach vorne verschoben ist. Die Seitenlehne 11 und die Wange 8 sind dagegen ortsfest. Der Polsterkörper 7 ist um annähernd 90° verschwenkt gezeigt. Dabei ist zu erkennen, daß die Schwenkachse des Schwenklagers 9 oberhalb der Oberfläche des Polsterkörpers 7 vorgesehen ist, wodurch eine stabilere Lage des Polsterkörpers 7 erreicht wird.

Der Polsterkörper 7 wird einseitig durch einen Schrank und auf der anderen Seite durch die Klappstütze 10 abgestützt. Es besteht durchaus die Möglichkeit, den Schrank ebenfalls durch eine Klappstütze zu ersetzen oder aber nur eine Klappstütze 10 zu verwenden, die dann am Boden befestigt werden muß um sowohl Zug- als auch Druckkräfte aufnehmen zu können. Das Lehnenpolster 6 ist heruntergeklappt gezeigt und bildet zusammen mit dem Polsterkörper 7 und dem Sitzpolster 5 einen Liegeplatz. Das Sitzpolster 5 ist in seiner Neigung verstellbar, so daß auch ein ebener Liegeplatz einstellbar ist.

## Patentansprüche

1. In einen Liegeplatz umwandelbarer Polstersitz (3) für den Einbau in ein Kraftfahrzeug (1), dessen Sitzpolster (5) und Lehnenpolster (6) durch Lagenänderung relativ zum Unterbau z.B. einem Gestell, aus wenigstens einer Sitzposition in mindestens eine Liegeposition umstellbar ist, wobei ein dritter Polsterkörper (7) schwenkbar vorgesehen ist, der in Fahrzeuglängsrichtung gerichteter Liegeposition zusammen mit dem in Fahrzeuglängsachse vorgeschobenen Sitzpolster (5) und dem Lehnenpolster (6) einen Liegeplatz bildet,
**dadurch gekennzeichnet,**
daß der dritte Polsterkörper (7) in Sitzposition sich annähernd senkrecht in einer Parallelebene zum Lehnenpolster (6) und an diesem anliegend befindet und ausschließlich um eine horizontale, fahrzeugfeste Schwenkachse (Schwenklager 9) in Liegeposition schwenkbar ist, wobei die Schwenkachse im wesentlichen mittig am dritten Polsterkörper (7) befestigt ist.

2. In einen Liegeplatz umwandelbarer Polstersitz (3) nach Anspruch 1,
**dadurch gekennzeichnet,**
daß der dritte Polsterkörper (7) in annähernd senkrechter Stellung (Sitzposition) vom Fahrzeugboden (2) bis zur Oberkante des Lehnenpolsters (6) reicht.

3. In einen Liegeplatz umwandelbarer Polstersitz (3) nach Anspruch 1 oder 2,
**dadurch gekennzeichnet,**
daß die Schwenkachse für den dritten Polsterkörper (7) in Liegeposition geringfügig oberhalb der Liegefläche verläuft.

4. In einen Liegeplatz umwandelbarer Polstersitz (3) nach mindestens einem der Ansprüche 1 bis 3,
**dadurch gekennzeichnet,**
daß zur Sicherung der Liegeposition des dritten Polsterkörpers (7) mindestens eine abklappbare Stütze (10) vorgesehen ist.

5. In einen Liegeplatz umwandelbarer Polstersitz (3) nach mindestens einem der Ansprüche 1 bis 4,
**dadurch gekennzeichnet,**
daß mindestens eine dem Polstersitz (3) zugeordnete Seitenlehne (11) ortsfest angeordnet ist, in die ein Schwenklager (9) für den dritten Polsterkörper (7) integriert ist.

## Claims

1. A padded seat (3) for building into a motor vehicle (1) and convertible into a berth and the seat cushion (5) and back cushion (6) of which by alteration of their position relative to the substructure, e.g., a frame, may be changed over from at least one sitting position into at least one lying position, whilst a third pivoting padded body (7) is provided, which together with the seat cushion (5) pushed forward along the longitudinal axis of the vehicle and the back cushion (6) forms a berth in a lying position directed longitudinally to the vehicle,
**characterized in that**
in the sitting position the third padded body (7) stands approximately upright in a plane parallel with the back cushion (6) and adjacent to the latter and may be swung exclusively about a horizontal pivot fixed to the vehicle (pivot bearing 9) into the lying position, the pivot being fastened essentially at the middle of the third padded body (7).

2. A padded seat (3) convertible into a berth, as in Claim 1,
**characterized in that**
in its approximately upright position (the sitting position) the third padded body (7) reaches from the floor (2) of the vehicle up to the top edge of the back cushion (6).

3. A padded seat (3) convertible into a berth, as in Claim 1 or 2,
**characterized in that**
in the lying position the pivot for the third padded body (7) runs slightly above the face of the berth.

4. A padded seat (3) convertible into a berth, as in at least one of the Claims 1 to 3, **characterized in that**
for securing the lying position of the third padded body (7) at least one support (10) is provided, which may be folded down.

5. A padded seat (3) convertible into a berth, as in at least one of the Claims 1 to 4, **characterized in that**
at least one arm (11) is associated with the padded seat (3), arranged in a fixed position at the side and into which a pivot bearing (9) for the third padded body (7) is integrated.

## Revendications

1. Siège rembourré (3) transformable en une couchette, destiné à être monté dans un véhicule (1), siège dont la surface de siège rembourrée (5) et le dossier rembourré (6) peuvent être amenés d'au moins une position de siège vers au moins une position couchette par variation de la position par rapport au socle, par exemple un châssis, un troisième élément rembourré (7) étant agencé de façon basculable de manière à former, en position couchée selon la direction longitudinale du véhicule, une couchette avec la surface de siège rembourrée (5) déplacée dans l'axe longitudinal du véhicule, et le dossier rembourré (6),
caractérisé en ce que le troisième élément rembourré (7) se trouve dans une position approximativement verticale, dans un plan parallèle au dossier rembourré (6) et de façon adjacente à celui-ci, lorsque le siège rembourré (3) est en position de siège, et en ce qu'il n'est basculable en position couchette qu'autour d'un axe de basculement (palier de basculement 9) horizontal solidaire du véhicule, l'axe de basculement étant essentiellement médian au troisième élément rembourré (7).

2. Siège rembourré (3) transformable en une couchette, selon la revendication 1,
caractérisé en ce que le troisième élément rembourré (7) s'étend du plancher du véhicule (2) jusqu'à l'arête supérieure du dossier rembourré (6), dans sa position approximativement verticale.

3. Siège rembourré (3) transformable en une couchette, selon la revendication 1 ou 2,
caractérisé en ce que, en position couchette, l'axe de basculement du troisième élément rembourré (7) s'étend légèrement au-dessus de la surface de couchette.

4. Siège rembourré (3) transformable en une couchette, selon l'une des revendications 1 à 3,
caractérisé en ce qu'au moins un pied rabattable (10) est prévu en vue de fixer la position couchette du troixième élément rembourré (7).

5. Siège rembourré (3) transformable en une couchette, selon l'une des revendications 1 à 4,
caractérisé en ce qu'un accoudoir (11) associé au siège rembourré (3) est agencé de manière fixe et comporte, de façon intégrée, un palier de basculement (9) pour le troisième élément rembourré (7).
